(19) Europäisches Patentamt
European Patent Office
Office européen des brevets

(11) **EP 2 037 447 A1**

(12) **EUROPEAN PATENT APPLICATION**
published in accordance with Art. 153(4) EPC

(43) Date of publication:
**18.03.2009 Bulletin 2009/12**

(51) Int Cl.:
**G09G 5/10** (2006.01)   **G09G 3/20** (2006.01)
**G09G 5/00** (2006.01)   **H04N 5/20** (2006.01)

(21) Application number: **07745018.7**

(22) Date of filing: **11.06.2007**

(86) International application number:
**PCT/JP2007/061728**

(87) International publication number:
**WO 2007/145168 (21.12.2007 Gazette 2007/51)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **13.06.2006   JP 2006163148**

(71) Applicant: **Panasonic Corporation
Kadoma-shi
Osaka 571-8501 (JP)**

(72) Inventors:
• **TOMISAKA, Naoaki
c/o Panasonic Corporation
2-1-61, Shiromi,Chuo-ku
Osaka-shi, Osaka 540-6207 (JP)**

• **TAMURA, Kenji**

**c/o Panasonic Corporation
2-1-61, Shiromi,Chuo-ku
Osaka-shi, Osaka 540-6207 (JP)**
• **TAKAHASHI, Yuichiro
c/o Panasonic Corporation
2-1-61, Shiromi,Chuo-ku
Osaka-shi, Osaka 540-6207 (JP)**

(74) Representative: **Pautex Schneider, Nicole
Véronique et al
Novagraaf International SA
25, avenue du Pailly
1220 Les Avanchets - Geneva (CH)**

(54) **GRAY-SCALE CORRECTING DEVICE**

(57)    An amount of change calculated by an amount-of-change calculator (11) is stored in an amount-of-change storage (12), and an amount-of-change comparison unit (13) compares an amount of change between a frame one frame before a frame whose gradation is to be corrected and a frame before that frame. If the amount of change is larger than a predetermined value, correction value data of the frame one frame before is not used, but a correction value table of a frame before the change is chosen and read from a correction value calculator (15). If the amount of change is equal to or smaller than a predetermined value, a correction value table of the frame one frame before which did not changed much is read from the correction value calculator (15) and is written to a lookup table (16). Correction data (level data) is read from the lookup table (16) at an address and is outputted as a gradation-corrected luminance signal. In this way, based on an amount of change in a screen and according to a frame whose gradation is to be corrected, optimum correction data is chosen and gradation correction is performed, and thus optimum gradation correction can be done without a frame memory.

EP 2 037 447 A1

**(Cont. next page)**

【FIG.1】

Input luminance signal

Horizontal and vertical reference signal

| 11 | 12 | 13 |

Amount-of-change calculator

Amount-of-change storage

Amount-of-change comparison unit

Controller

17

Histogram memory

14

Correction value calculator

15

Lookup table memory

16

Output luminance signal

**Description**

TECHNICAL FIELD

The present invention relates to a gradation correction apparatus for correcting luminance gradation of a video signal by means of a histogram.

BACKGROUND ART

Conventionally, there has been known a method for performing gradation correction of a video signal by means of a histogram (luminance distribution of a video signal). A basic concept of gradation correction using a histogram is as follows. Occurrence frequency of each luminance signal level is calculated from an inputted video signal, and a histogram is created. This histogram data is accumulated from low luminance, and a cumulative histogram is thereby created. This cumulative histogram is normalized to obtain a cumulative luminance distribution. The normalized cumulative histogram is calculated in such a way that the maximum value in this cumulative luminance distribution matches the maximum value of the output luminance levels. Gradation correction of a video signal is performed by means of this cumulative histogram.

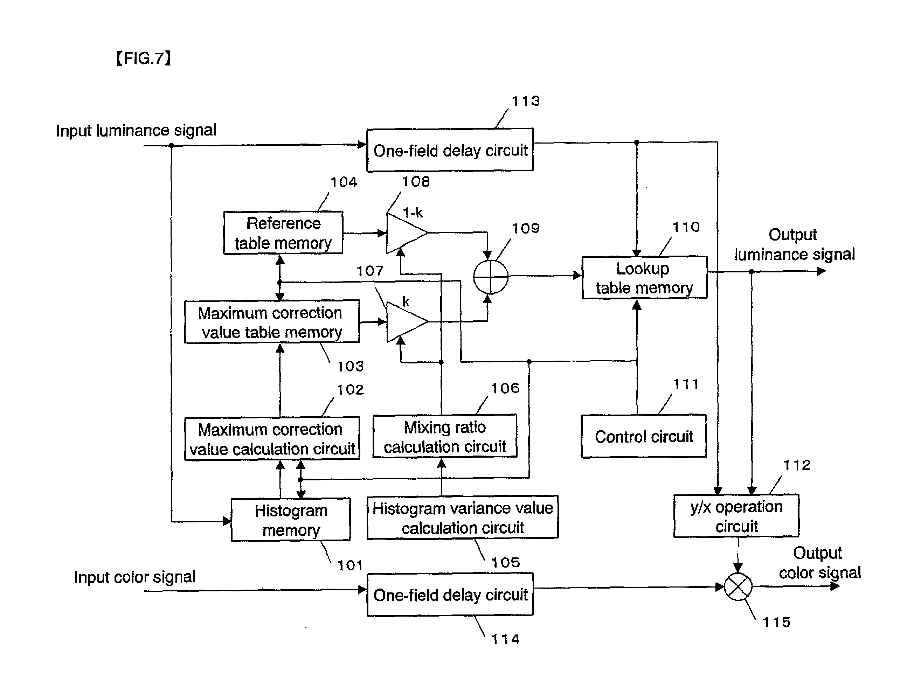

A gradation correction apparatus shown in Figure 7 is known as an apparatus for performing such gradation correction. This gradation correction apparatus comprises a histogram memory 101, a maximum correction value calculation circuit 102, a maximum correction value table memory 103, a reference table memory 104, a histogram variance value calculation circuit 105, a mixing ratio calculation circuit 106, multipliers 107 and 108, an adder 109, a lookup table memory 110, a control circuit 111, and a one-field delay circuit 113.

The histogram memory 101 is a memory for acquiring a luminance distribution of an input luminance signal, and stores the frequency of each luminance level of an inputted luminance signal.

The maximum correction value calculation circuit 102 comprises a histogram accumulation circuit, a cumulative histogram memory, and a normalization operation circuit. This maximum correction value calculation circuit 102 accumulates data in the histogram memory 101 from low luminance in order, stores the accumulated result in the cumulative histogram memory and, based on the stored data in the cumulative histogram memory, normalizes each data in such a way that the maximum cumulative frequency thereof matches the maximum value of an output luminance signal.

The maximum correction value table memory 103 stores normalized correction data provided by the maximum correction value calculation circuit. An address of the maximum correction value table memory 103 is specified according to a luminance level of an input luminance signal. A luminance level stored in a storage area at a specified address is read by the control circuit 111 as a normalized level, and is outputted to the multiplier 107.

The reference table memory 104 stores a reference luminance level for each luminance level unit of a luminance signal. A reference luminance level is read by the control circuit 111, and is outputted to the multiplier 108.

The histogram variance value calculation circuit 105 is connected to an output of the histogram memory 101 and, based on a luminance distribution in the histogram memory 101, calculates a variance value (condition of variation in the luminance distribution) for each vertical scanning period.

The mixing ratio calculation circuit 106 is connected to an output of the histogram variance value calculation circuit 105, calculates a mixing ratio k (k<1) corresponding to a variance value, and provides the mixing ratio k to the multipliers 107 and 108.

The multiplier 107 multiplies a luminance level read from the maximum correction value table memory 103 by a mixing ratio k, and the multiplier 108 multiplies a luminance level read from the reference table memory 104 by a mixing ratio 1-k.

Each output of the multipliers 107 and 108 is added to each other by the adder 109, and the result is provided to the lookup table memory 110, is synchronized by the control circuit 111 to each address specification for the maximum correction value table memory 103 and the reference table memory 104, and is written into the lookup table memory 110.

The lookup table memory 110 is provided with an input luminance signal that is delayed by the one-field delay circuit 113. The lookup table memory 110 has a storage area to be addressed according to a luminance level of this luminance signal that is delayed one field by the one-field delay circuit 113, reads data from the addressed storage area, and outputs this signal as a gradation-corrected luminance signal. Such a gradation correction apparatus is disclosed, for example, in Japanese Patent Laid-Open Application No. 2000-322047.

However, the above-mentioned conventional configuration requires a processing time of one field since it calculates histogram data and creates a correction table. For that purpose, an original input luminance signal to be corrected also has to be delayed one field, and it would require, for example, a frame memory such as a one-filed delay circuit.

DISCLOSURE OF THE INVENTION

Problems to be solved by the invention

The invention has been made in the above-mentioned background. A purpose of the invention is to solve the conventional problems described above and provide a gradation correction apparatus capable of performing optimum gradation correction without a frame memory.

Means for solving the problems

One aspect of the invention is a gradation correction apparatus that comprises: an amount-of-change calculator for calculating an amount of change in a given frame of an input luminance signal; an amount-of-change storage for storing the amount of change; an amount-of-change comparison unit for comparing and judging an amount of change in each frame stored in the amount-of-change storage; a histogram memory for creating and storing frequency data for each luminance level of the input luminance signal frame by frame; an amount-of-correction calculator for calculating correction value data for each one of a plurality of luminance levels of the input luminance signal, based on frequency data in the histogram memory; and a lookup table memory for storing the correction value data from the amount-of-correction calculator as table data corresponding to each one of a plurality of luminance levels, for reading level data corresponding to a luminance level of the input luminance signal, and for outputting the level data as a gradation correction luminance signal, where the amount-of-correction calculator comprises: a correction value calculation table storage for calculating the correction value data based on frequency data in the histogram memory, and for storing the correction value data frame by frame; and a table choice unit for choosing a correction value table stored in the correction value calculation table storage, according to a judgment result of an amount of change between frames by the amount-of-change comparison unit, and where a correction value table of a frame before occurrence of a change is chosen if a judgment result of an amount of change between frames is that the amount of change is larger than a predetermined value, or a correction value table of a frame one frame before is chosen if the amount of change is equal to or smaller than a predetermined value, and gradation correction is performed.

Another aspect of the invention is a gradation correction method that comprises: creating frequency data for each luminance level of an input luminance signal frame by frame; calculating correction value data for each one of a plurality of luminance levels of the input luminance signal, based on the frequency data; and reading, from table data stored in such a way that the correction value data corresponds to each one of a plurality of luminance levels, level data corresponding to a luminance level of the input luminance signal, and outputting the level data as a gradation correction luminance signal, where: an amount of change in a given frame of the input luminance signal is calculated; an amount of change in each frame is compared and an amount of change between frames is judged; and a correction value table of a frame before occurrence of a change is chosen if the amount of change is larger than a predetermined value, or a correction value table of a frame one frame before is chosen if the amount of change is equal to or smaller than a predetermined value, and gradation correction is performed.

Another aspect of the invention is a gradation correction program that is a program stored in a memory and is for implementing a gradation correction function of: creating frequency data for each luminance level of an input luminance signal frame by frame; calculating correction value data for each one of a plurality of luminance levels of the input luminance signal, based on the frequency data; and reading, from table data stored in such a way that the correction value data corresponds to each one of a plurality of luminance levels, level data corresponding to a luminance level of the input luminance signal, and outputting the level data as a gradation correction luminance signal, and the program causes a computer to execute procedures for: calculating an amount of change in a given frame of the input luminance signal; comparing an amount of change in each frame and judging an amount of change between frames; and choosing a correction value table of a frame before occurrence of a change if the amount of change is larger than a predetermined value, or choosing a correction value table of a frame one frame before if the amount of change is equal to or smaller than a predetermined value, and performing gradation correction.

There are other aspects of the invention as described below. This disclosure of the invention therefore intends to provide part of the aspects of the invention and does not intend to limit the scope of the invention described and claimed herein.

BRIEF DESCRIPTION OF THE DRAWINGS

Figure 1 shows a configuration of a gradation correction apparatus of a first embodiment of the invention;
Figure 2 shows a configuration of a correction value calculator of the first embodiment of the invention;

Figure 3 is an illustration showing an example of a procedure of the first embodiment of the invention;
Figure 4 shows a configuration of a correction value calculator of a second embodiment of the invention;
Figure 5 shows characteristics of a brightness correction table and a darkness correction table of the second embodiment of the invention;
Figure 6 shows a configuration of a correction value calculator of a third embodiment of the invention; and
Figure 7 shows a configuration of a conventional gradation correction apparatus.

DESCRIPTION OF THE SYMBOLS

11: Amount-of-change calculator
12: Amount-of-change storage
13: Amount-of-change comparison unit
14: Histogram memory
15: Correction value calculator
16: Lookup table memory
17: Controller
21: Accumulator
22: Correction value calculation table storage
23: Table choice unit
41: Brightness correction table
42: Darkness correction table
43: Table correction unit
61: Flicker detector
101: Histogram memory
102: Maximum correction value calculation circuit
103: Maximum correction value table memory
104: Reference table memory
105: Histogram variance value calculation circuit
106: Mixing ratio calculation circuit
107: Multiplier
108: Multiplier
109: Adder
110: Lookup table memory
111: Control circuit
112: y/x operation circuit
113: One-field delay circuit
114: One-field delay circuit
115: Multiplier

BEST MODE OF EMBODYING THE INVENTION

Now, the invention will be described in detail. However, the following detailed description and appended drawings are not intended to limit the invention. Rather, the scope of the invention is defined by the appended claims.

A gradation correction apparatus of the invention comprises: an amount-of-change calculator for calculating an amount of change in a given frame of an input luminance signal; an amount-of-change storage for storing the amount of change; an amount-of-change comparison unit for comparing and judging an amount of change in each frame stored in the amount-of-change storage; a histogram memory for creating and storing frequency data for each luminance level of the input luminance signal frame by frame; an amount-of-correction calculator for calculating correction value data for each one of a plurality of luminance levels of the input luminance signal, based on frequency data in the histogram memory; and a lookup table memory for storing the correction value data from the amount-of-correction calculator as table data corresponding to each one of a plurality of luminance levels, for reading level data corresponding to a luminance level of the input luminance signal, and for outputting the level data as a gradation correction luminance signal, where the amount-of-correction calculator comprises: a correction value calculation table storage for calculating the correction value data based on frequency data in the histogram memory, and for storing the correction value data frame by frame; and a table choice unit for choosing a correction value table stored in the correction value calculation table storage, according to a judgment result of an amount of change between frames by the amount-of-change comparison unit, and where a correction value table of a frame before occurrence of a change is chosen if a judgment result of an amount of change between frames is that the amount of change is larger than a predetermined value, or a correction value table of a frame one frame before is chosen if the amount of change is equal to or smaller than a predetermined value, and gradation correction is performed.

This gradation correction apparatus compares an amount of change between a frame one frame before a frame whose gradation is to be corrected and a frame before that frame. If the amount of change is larger than a predetermined value, a correction value table calculated from histogram data (frequency data) of a frame before occurrence of the change is used. If the amount of change is smaller than a predetermined value, a correction value table calculated from histogram data of a frame one frame before is used to perform gradation correction. This allows appropriate gradation correction to be performed without a frame memory.

In the gradation correction apparatus of the invention, the amount-of-correction calculator may comprise: a table for correction for correcting a correction value table in the correction value calculation table storage; and a table correction unit for correcting the correction value table according to an amount of change from the amount-of-change comparison unit, and when the judgment result is that the amount of change is equal to or smaller than a predetermined value, an amount of change in a current frame may be estimated and a correction value table in the correction value calculation table storage may be corrected in proportion to the amount of change between the frames by using the table for correction.

In this gradation correction apparatus, the condition of a current frame is estimated according to an amount of change. Correction data (correction value table) calculated from a histogram (frequency data) is corrected in proportion to the change therein based on a table for correction prepared in advance. Gradation correction is performed by means of this corrected correction data (corrected correction value table). This allows more flexible gradation correction to be performed without a frame memory.

In the gradation correction apparatus of the invention, the amount-of-correction calculator may comprise a flicker detector for, frame by frame, detecting a flicker component to judge whether there is a flicker component or not, and correction value data of a frame in which a flicker is detected need not be used.

In this gradation correction apparatus, a flicker detector is provided, and a flicker (flicker component) is detected. A correction table (correction value data) of a frame in which a flicker has been detected is not referred to. This allows more favorable gradation correction to be performed without a frame memory.

A gradation correction method of the invention comprises: creating frequency data for each luminance level of an input luminance signal frame by frame; calculating correction value data for each one of a plurality of luminance levels of the input luminance signal, based on the frequency data; and reading, from table data stored in such a way that the correction value data corresponds to each one of a plurality of luminance levels, level data corresponding to a luminance level of the input luminance signal, and outputting the level data as a gradation correction luminance signal, where: an amount of change in a given frame of the input luminance signal is calculated; an amount of change in each frame is compared and an amount of change between frames is judged; and a correction value table of a frame before occurrence of a change is chosen if the amount of change is larger than a predetermined value, or a correction value table of a frame one frame before is chosen if the amount of change is equal to or smaller than a predetermined value, and gradation correction is performed.

A gradation correction program of the invention is a program stored in a memory and is for implementing a gradation correction function of: creating frequency data for each luminance level of an input luminance signal frame by frame; calculating correction value data for each one of a plurality of luminance levels of the input luminance signal, based on the frequency data; and reading, from table data stored in such a way that the correction value data corresponds to each one of a plurality of luminance levels, level data corresponding to a luminance level of the input luminance signal, and outputting the level data as a gradation correction luminance signal, and the program causes a computer to execute procedures for: calculating an amount of change in a given frame of the input luminance signal; comparing an amount of change in each frame and judging an amount of change between frames; and choosing a correction value table of a frame before occurrence of a change if the amount of change is larger than a predetermined value, or choosing a correction value table of a frame one frame before if the amount of change is equal to or smaller than a predetermined value, and performing gradation correction.

Preferred embodiments of the invention will be described in detail below with reference to the appended drawings. In the present specification and drawings, components having substantially the same function configuration are designated by the same letters and are not described repeatedly.

(First embodiment)

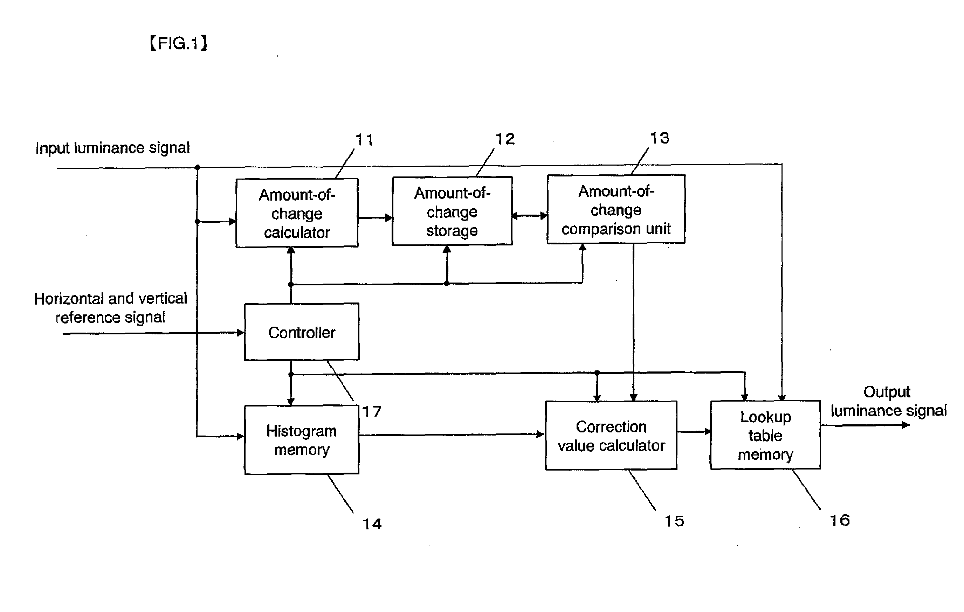

Figure 1 shows a configuration of a gradation correction apparatus of a first embodiment of the invention. As shown in Figure 1, this gradation correction apparatus comprises an amount-of-change calculator 11, an amount-of-change storage 12, an amount-of-change comparison unit 13, a histogram memory 14, a correction value calculator 15, a lookup table memory 16, and a controller 17.

The amount-of-change calculator 11 is supplied with a digitized luminance signal as an input signal. From the input luminance signal, the amount-of-change calculator 11 calculates as an amount of change an average value and motion vector of a screen frame by frame. The controller 17 supplies sampling pulses required for the calculation and synchronization signals to be horizontal and vertical references.

The amount-of-change storage 12 stores an amount of change, such as an average value and a motion vector, calculated by the amount-of-change calculator 11. This amount-of-change storage 12 comprises, for example, a register, and stores amount-of-change data frame by frame in the register at a specified address. The controller 17 supplies a register address and control signal for the storage.

The amount-of-change comparison unit 13 comprises a CPU, a microcomputer, or the like. This amount-of-change comparison unit 13 acquires amount-of-change data, such as an average value and motion vector of a screen, stored frame by frame in the amount-of-change storage 12. In an inactive video period before an active video period of a frame whose gradation is to be corrected (hereinafter referred to as a blanking interval), the amount-of-change comparison unit 13 compares the data between a frame one frame before the frame whose gradation is to be corrected and a frame before that frame, and judges whether the amount of change is larger than a predetermined value or not. A result of this comparison is outputted to the correction value calculator 15 and is used as a judgment signal for choosing correction data (correction value table) of which frame to be used. The controller 17 supplies a judgment signal required for the comparison for judging whether a period is an active video period or a blanking interval. The number of frames to be compared and the predetermined value required for judging an amount of change are held, for example, in a register. These predetermined value and number of frames can be arbitrarily set by a user. When comparing an amount of change, the amount-of-change comparison unit 13 can calculate and hold the rate of change (rate of amount of change) and information on the difference in an average value and motion vector between a frame one frame before and a frame before that frame.

The histogram memory 14 is supplied with a digitized luminance signal as an input signal. This histogram memory 14 is a memory for acquiring a luminance distribution of the input luminance signal. The histogram memory 14, for each luminance level unit of a luminance signal, has a storage area to be addressed according to that luminance level. A frequency (frequency data) is stored in each storage area. That is, each time one pixel's worth of luminance signal is supplied, the frequency in the storage area of the histogram memory 14 corresponding to the luminance level of the luminance signal is incremented by 1. The storage contents of the histogram memory 14 are completely cleared to zero by the controller 17 for each vertical period. In other words, the histogram memory 14 acquires a new luminance distribution for each vertical period.

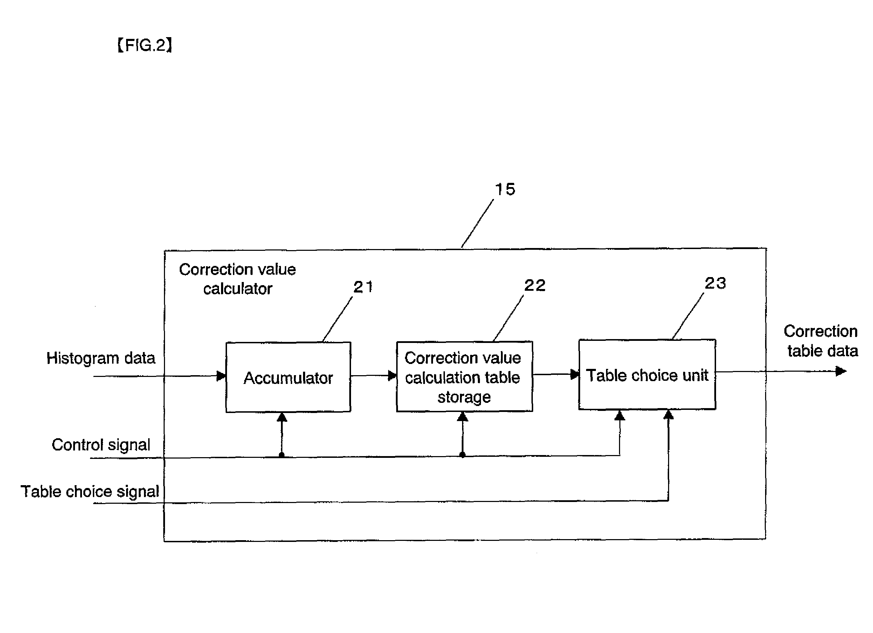

As shown in Figure 2, the correction value calculator 15 comprises an accumulator 21, a correction value calculation table storage 22, and a table choice unit 23. This correction value calculator corresponds to the amount-of-correction calculator of the invention.

The accumulator 21 accumulates, frame by frame, data in the histogram memory 14 from low luminance in order, and normalizes each data in such a way that the maximum cumulative frequency thereof matches the maximum value of an output luminance signal (gradation correction luminance signal). This accumulator 21 comprises a logic circuit.

Similar to the histogram memory 14, the correction value calculation table storage 22, for each luminance level unit, has a frequency (frequency data) storage area to be addressed according to that luminance level, the number of storage areas being equal to the number of frames that a user can specify. Correction value data resulting from normalizing accumulated data in the histogram memory calculated by the accumulator 21 is written frame by frame to this correction value calculation table storage 22. The writing of data to the correction value calculation table storage 22 is controlled by a control signal from the controller 17.

A table choice signal is inputted from the amount-of-change comparison unit 13 to the table choice unit 23, the table choice signal indicating a correction table (correction value table) of which frame to be used as a result of comparison of an amount of change between frames. According to this table choice signal, the table choice unit 23 chooses and reads from the correction value calculation table storage 22 a correction table (correction value table) of a frame to be used.

The lookup table memory 16 is supplied with an input luminance signal. This lookup table memory 16 has a storage area to be addressed according to a luminance level of the input luminance signal. The lookup table memory 16 reads data (level data) from the addressed storage area, and outputs the data as a gradation-corrected luminance signal (gradation correction luminance signal). Output data from the correction value calculator 15 is written as a luminance level to each storage area of the lookup table. This writing is controlled by the controller 17.

The controller 17 is supplied with horizontal and vertical synchronization signals required for generating each control signal for the amount-of-change calculator 11, the amount-of-change storage 12, the amount-of-change comparison unit 13, the histogram memory 14, the correction value calculator 15, and the lookup table memory 16. The controller 17 generates each control signal based on the horizontal and vertical synchronization signals.

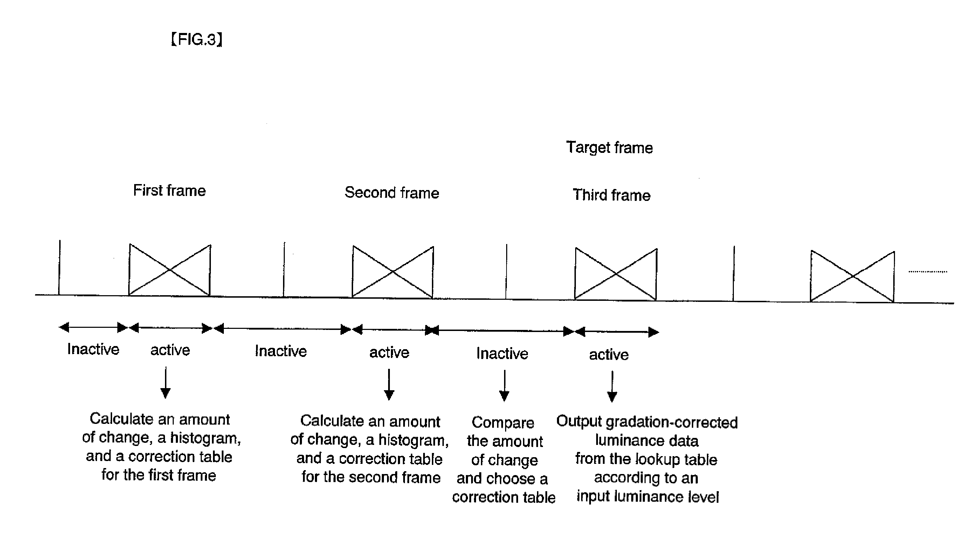

Figure 3 shows a procedure of the gradation correction process. A gradation correction procedure is shown here for data of the third frame as an example.

Initially, in the first frame, an amount of change such as an average value and motion vector of a screen is calculated by the amount-of-change calculator 11, and is stored in a register for the first frame of the amount-of-change storage 12. At the same time as the amount of change is calculated, a luminance distribution is stored in the histogram memory 14. The accumulator 21 of the correction value calculator 15 accumulates histogram data (frequency data) in the histogram memory 14 from low luminance in order and normalizes each data in such a way that the maximum cumulative frequency thereof matches the maximum value of an output luminance signal (gradation correction luminance signal), and the result is stored as correction value data (correction value table) in the correction value calculation table storage 22.

Also in the second frame as in the first frame, an amount of change in a screen, a histogram, and correction value data (correction value table) are calculated and stored.

In a blanking interval before the active period of the third frame, an amount of change is compared between a frame one frame before and a frame two frames before the third frame. If this amount of change is larger than a predetermined value that can be set arbitrarily, correction data (correction value table) of the frame one frame before is not used, but correction data (correction value table) of the frame two frames before, which is stable, is read by the table choice unit 23 of the correction value calculator 15 and is written to the lookup table 16 as gradation correction data. In contrast to this, if the amount of change is equal to or smaller than a predetermined value, a correction table (correction value table) of the frame one frame before, in which there is not much change, is read by the table choice unit 23 of the correction value calculator 15 and is written to the lookup table 16 as gradation correction data.

In the active period of the third frame, data (level data) in a storage area addressed according to a luminance level of an input luminance signal is read from the lookup table 16, and is outputted as a gradation-corrected luminance signal.

In this operation example, data (amount-of-change data) is compared between a frame one frame before a frame whose gradation is to be corrected and a frame two frames before. Alternatively, frames to be compared can be set arbitrarily.

(Second embodiment)

A configuration of a gradation correction apparatus of a second embodiment of the invention is different from the configuration of the first embodiment in that a correction value calculator has a table correction unit and correction tables. While a configuration of the correction value calculator will be mainly described below, the configuration of the gradation correction apparatus of the embodiment is the same as the configuration of the first embodiment unless otherwise mentioned herein.

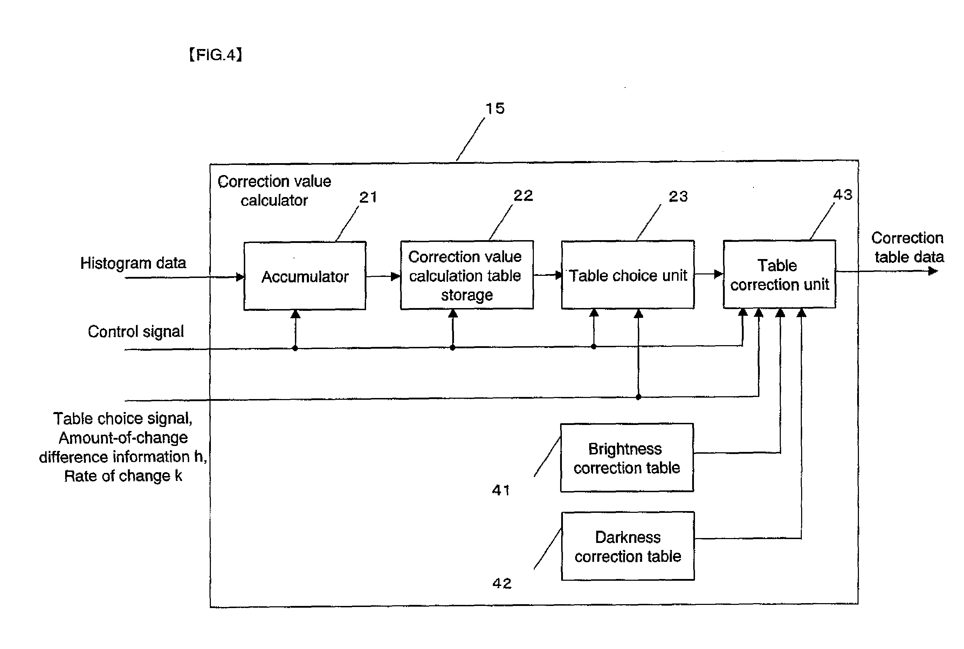

Figure 4 shows the configuration of the correction value calculator of the gradation correction apparatus of the second embodiment of the invention.

As shown in Figure 4, the correction value calculator 15 comprises an accumulator 21, a correction value calculation table storage 22, a table choice unit 23, a brightness correction table 41, a darkness correction table 42, and a table correction unit 43. The accumulator 21, the correction value calculation table storage 22, and the table choice unit 23 shown in Figure 4 have the same configurations as those of the first embodiment shown in Figure 2. Those configurations have already been described in the first embodiment and, therefore, will not be described here.

The table correction unit 43 estimates luminance information on a current frame based on information, calculated by the amount-of-change comparison unit 13, on the difference in an average value between compared frames. This table correction unit 43 corrects a correction table (correction value table) chosen by the table choice unit 23, using the brightness correction table 41 or the darkness correction table 42.

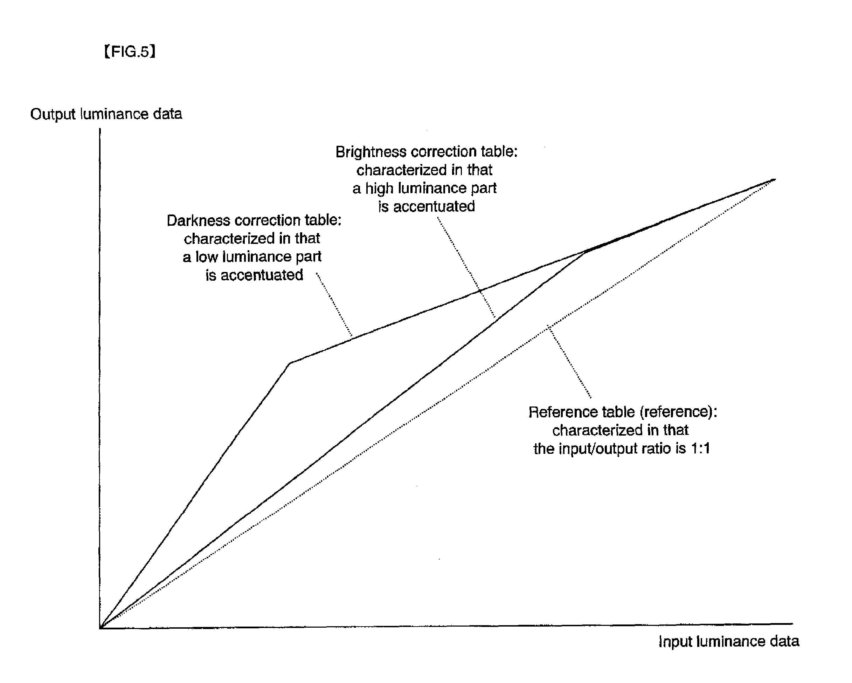

As shown in Figure 5, the brightness correction table 41 is a correction table (correction value table) in which a high luminance part is accentuated. The darkness correction table 42 is a correction table (correction value table) in which a low luminance part is accentuated. The brightness correction table 41 and the darkness correction table 42 are correction table data previously determined by an FPGA evaluation or the like. The brightness correction table 41 or the darkness correction table 42 corresponds to the table for correction of the invention.

A concrete correction procedure of the table correction unit 43 is shown below. As in the case of the example of the first embodiment shown in Figure 3, a case is assumed in which the third frame is to be corrected and an amount of change in a screen is compared between the first and second frames. In this case, which of the brightness correction table 41 or the darkness correction table 42 is to be used by the table correction unit 43 is chosen based on information on the difference in an average value of a screen between the frames calculated by the amount-of-change comparison unit 13.

Now, let h be the difference information inputted from the amount-of-change comparison unit 13. Then the difference information h is expressed by the following formula (1):

[Mathematical formula 1]

$$h = (\text{average value of the frame two frames before})$$

$$- (\text{average value of the frame one frame before}) \qquad (1)$$

If h<0, it follows that the average value of the frame one frame before is larger than the average value of the frame two frames before. Therefore, the average value of the third frame is estimated to be larger (=brighter), and the brightness correction table 41 is chosen.

On the other hand, if $h \geqq 0$, it follows that the average value of the frame one frame before is smaller than the average value of the frame two frames before. Therefore, the average value of the third frame is estimated to be smaller (=darker), and the darkness correction table 42 is chosen.

Then, after the table for correction is chosen, data in the chosen brightness correction table 41 or darkness correction table 42 is corrected based on the rate of change (rate of amount of change) between the frames calculated by the amount-of-change comparison unit 13. In the embodiment, with reference to correction data (correction value table) of the table choice unit 23, the data in the chosen brightness correction table 41 or darkness correction table 42 is corrected in proportion to the change between the frames. Now, let k be the rate of change to be inputted from the amount-of-change comparison unit 13. Then, the rate of change k is expressed by the following formula (2):

[Mathematical formula 2]

$$k = | (\text{average value of the frame two frames before}) /$$

$$(\text{average value of the frame one frame before}) | \quad (k \leqq 1) \quad (2)$$

By using this rate of change k, the correction data (correction value table) of the table choice unit 23 is corrected. The formula of the correction is expressed by the following formula (3):

[Mathematical formula 3]

$$\{(1\text{-}k) \times (\text{table value of the table choice unit 23})\}$$

$$+ \{k \times (\text{brightness or darkness correction table value})\} \quad (3)$$

Based on a control signal from the controller 17, the correction data (correction value table) read from the correction value calculation table storage 22 by the table choice unit 23 is multiplied by 1-k. Then the correction data (table for correction) read from the brightness correction table 41 or darkness correction table 42 chosen based on the difference information h is multiplied by k. The results of the multiplications are added together, then gradation correction data is acquired. The correction data thus corrected is written to the lookup table memory 16. Then, data (level data) in a storage area addressed according to a luminance level of an input luminance signal is read and outputted as a gradation-corrected luminance signal (gradation correction luminance signal).

With respect to the brightness correction table 41 and the darkness correction table 42, fixed data may be stored in advance as correction data (table for correction), or data that can be rewritten by a CPU or microcomputer may be stored so that the data can be changed.

(Third embodiment)

A configuration of a gradation correction apparatus of a third embodiment of the invention is different from the configuration of the first embodiment in that a correction value calculator has a flicker detector. While a configuration of the correction value calculator will be mainly described below, the configuration of the gradation correction apparatus of the embodiment is the same as the configuration of the first embodiment unless otherwise mentioned herein.

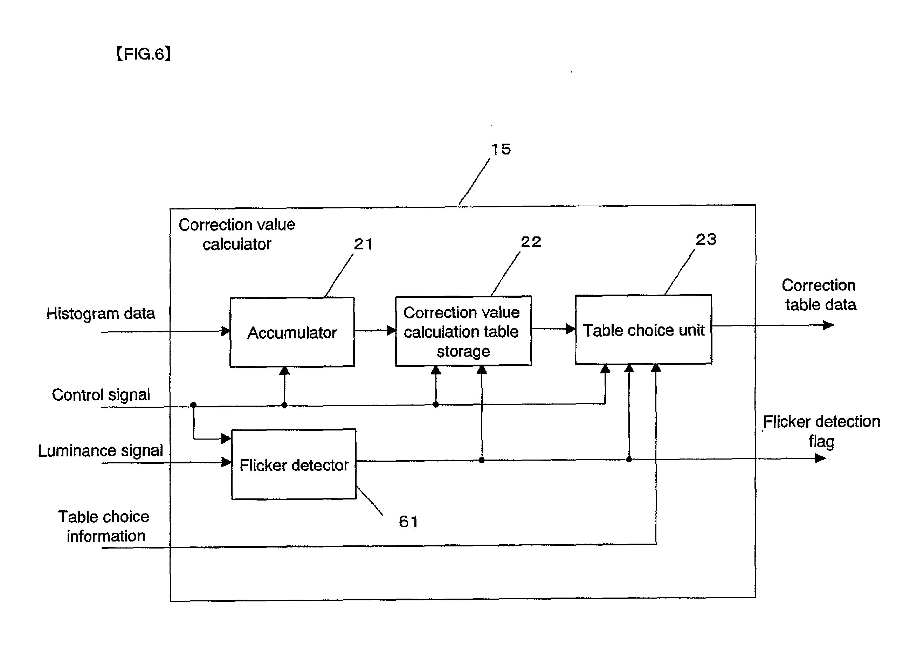

Figure 6 shows the configuration of the correction value calculator 15 of the gradation correction apparatus of the third embodiment of the invention.

As shown in Figure 6, the correction value calculator 15 comprises an accumulator 21, a correction value calculation table storage 22, a table choice unit 23, and a flicker detector 61. The accumulator 21, the correction value calculation table storage 22, and the table choice unit 23 shown in Figure 6 have the same configurations as those of the first embodiment shown in Figure 2. Those configurations have already been described in the first embodiment and, therefore, will not be described here.

The flicker detector 61 detects a flicker (flicker component) frame by frame, and outputs a flicker detection flag, which indicates that a flicker (flicker component) was detected, to the amount-of-change comparison unit 13, the correction value calculation table storage 22, and the table choice unit 23.

Referring to the flicker detection flag, the amount-of-change comparison unit 13 does not compare an amount of change with a frame in which a flicker (flicker component) was detected.

The correction value calculation table storage 22 does not use correction data of a frame in which a flicker (flicker component) was detected. Referring to a flicker detection flag, the correction value calculation table storage 22 deletes correction value data of a frame in which a flicker (flicker component) was detected.

The table choice unit 23 does not use correction value data of a frame in which a flicker (flicker component) was detected. Referring to a flicker detection flag, the table choice unit 23 does not choose table data of a frame in which a flicker (flicker component) was detected.

A publicly-known art may be used as the flicker detector. For example, in a case where the lighting is performed by a fluorescent lamp blinking at the power frequency of 50 Hz, and the vertical scanning frequency of a camera is 60 Hz, a flicker occurs every three fields in a video signal. A method is known in which, by using this, a flicker is judged to be occurring in a target frame if there is a large change in the magnitude of the average value of the luminance between the target frame and a frame one field before that frame and if the average value of the luminance of the target frame is about the same as that of a frame three fields before that frame. By using a method like the above, a flicker can also be detected frame by frame.

The function of the gradation correction apparatus (gradation correction function) described above can also be implemented by a program stored in a memory of the gradation correction apparatus. In this case, the amount-of-change calculator, the amount-of-change comparison unit, the correction value calculator, and the table choice unit are configured by a processor such as a CPU, and the amount-of-change storage, the histogram memory, the lookup table, and the correction value calculation table storage can be configured by an HDD, a memory, and the like.

While there have been described what are at present considered to be preferred embodiments of the invention, it will be understood that various modifications and variations may be made thereto, and it is intended that appended claims cover all such modifications and variations as fall within the true spirit and scope of the invention.

Industrial applicability

As stated above, the gradation correction apparatus of the invention allows gradation correction to be optimized without a frame memory, and is therefore useful for a camera signal processor or the like of a portable camera or surveillance camera, for which it is important to reduce costs and the size of circuits.

**Claims**

1. A gradation correction apparatus comprising:

an amount-of-change calculator for calculating an amount of change in a frame of an input luminance signal;
an amount-of-change storage for storing the amount of change;
an amount-of-change comparison unit for comparing and judging an amount of change in each frame stored in the amount-of-change storage;
a histogram memory for creating and storing frequency data for each luminance level of the input luminance signal, frame by frame;
an amount-of-correction calculator for calculating correction value data for each luminance level of the input luminance signal, based on the frequency data in the histogram memory; and
a lookup table memory for storing the correction value data from the amount-of-correction calculator as table data corresponding to each luminance level, for reading level data corresponding to the luminance level of the input luminance signal, and for outputting the level data as a gradation correction luminance signal,

wherein the amount-of-correction calculator comprises:

a correction value calculation table storage for calculating the correction value data based on the frequency data in the histogram memory, and for storing the correction value data, frame by frame; and
a table choice unit for choosing a correction value table stored in the correction value calculation table storage, according to a judgment result of an amount of change between frames by the amount-of-change comparison unit,
and wherein a correction value table of a frame before change is chosen when a judgment result of an amount of change between frames is that the amount of change is larger than a predetermined value, or a correction value table of a frame one frame before is chosen when the amount of change is equal to or smaller than a predetermined value, and gradation correction is performed.

2. The gradation correction apparatus according to claim 1, wherein the amount-of-correction calculator comprises:

a table for correction for correcting a correction value table in the correction value calculation table storage; and
a table correction unit for correcting the correction value table according to an amount of change from the amount-of-change comparison unit,
and wherein, when the judgment result is that the amount of change is equal to or smaller than a predetermined value, an amount of change in a current frame is estimated and a correction value table in the correction value calculation table storage is corrected in proportion to the amount of change between the frames by using the table for correction.

3. The gradation correction apparatus according to claim 1, wherein the amount-of-correction calculator comprises a flicker detector for, frame by frame, detecting a flicker component to judge whether there is a flicker component or not, and wherein correction value data of a frame in which a flicker is detected is not used.

4. A gradation correction method comprising:

creating frequency data for each luminance level of an input luminance signal, frame by frame;
calculating correction value data for each luminance level of the input luminance signal, based on the frequency data; and
reading level data corresponding to the luminance level of the input luminance signal from stored table data in which the correction value data corresponds to each luminance level, and outputting the level data as a gradation correction luminance signal,

wherein the method further comprises:

calculating an amount of change in a frame of the input luminance signal;
comparing an amount of change in each frame and judging an amount of change between frames; and
and wherein a correction value table of a frame before change is chosen when the amount of change is larger than a predetermined value, or a correction value table of a frame one frame before is chosen when the amount of change is equal to or smaller than a predetermined value, and gradation correction is performed.

5. A gradation correction program, the program being stored in a memory, the program being for implementing a gradation correction function of:

creating frequency data for each luminance level of an input luminance signal, frame by frame;
calculating correction value data for each luminance level of the input luminance signal, based on the frequency data; and
reading level data corresponding to the luminance level of the input luminance signal from stored table data in which the correction value data corresponds to each luminance level, and outputting the level data as a gradation correction luminance signal,

wherein the program causing a computer to execute procedures for:

calculating an amount of change in a frame of the input luminance signal;
comparing an amount of change in each frame and judging an amount of change between frames; and
choosing a correction value table of a frame before change when the amount of change is larger than a predetermined value, or choosing a correction value table of a frame one frame before when the amount of change is equal to or smaller than a predetermined value, and performing gradation correction.

【FIG.1】

Input luminance signal

Amount-of-change calculator  11

Amount-of-change storage  12

Amount-of-change comparison unit  13

Horizontal and vertical reference signal

Controller  17

Histogram memory  14

Correction value calculator  15

Lookup table memory  16

Output luminance signal

EP 2 037 447 A1

【FIG.2】

EP 2 037 447 A1

【FIG.3】

Target frame

First frame                    Second frame                    Third frame

Inactive      active      Inactive      active      Inactive      active

Calculate an amount        Calculate an amount      Compare       Output gradation-corrected
of change, a histogram,    of change, a histogram,  the amount    luminance data
and a correction table     and a correction table   of change     from the lookup table
for the first frame        for the second frame     and choose a  according to an
                                                     correction table  input luminance level

EP 2 037 447 A1

【FIG.4】

Correction value calculator — 15

Histogram data → Accumulator (21) → Correction value calculation table storage (22) → Table choice unit (23) → Table correction unit (43) → Correction table data

Control signal

Table choice signal, Amount-of-change difference information h, Rate of change k

Brightness correction table (41)

Darkness correction table (42)

EP 2 037 447 A1

【FIG.5】

Output luminance data

Brightness correction table:
characterized in that
a high luminance part
is accentuated

Darkness correction table:
characterized in that
a low luminance part
is accentuated

Reference table (reference):
characterized in that
the input/output ratio is 1:1

Input luminance data

【FIG.6】

Correction value calculator — 15

Histogram data → Accumulator (21) → Correction value calculation table storage (22) → Table choice unit (23) → Correction table data

Control signal

Luminance signal → Flicker detector (61) → Flicker detection flag

Table choice information

EP 2 037 447 A1

【FIG.7】

Input luminance signal

113 One-field delay circuit

104 Reference table memory

108 1-k

109 ⊕

107

110 Lookup table memory → Output luminance signal

103 Maximum correction value table memory

k

102 Maximum correction value calculation circuit

106 Mixing ratio calculation circuit

111 Control circuit

101 Histogram memory

105 Histogram variance value calculation circuit

112 y/x operation circuit

Input color signal

114 One-field delay circuit

115 ⊗ → Output color signal

EP 2 037 447 A1

## INTERNATIONAL SEARCH REPORT

| | International application No. |
|---|---|
| | PCT/JP2007/061728 |

**A. CLASSIFICATION OF SUBJECT MATTER**
*G09G5/10*(2006.01)i, *G09G3/20*(2006.01)i, *G09G5/00*(2006.01)i, *H04N5/20*(2006.01)i

According to International Patent Classification (IPC) or to both national classification and IPC

**B. FIELDS SEARCHED**

Minimum documentation searched (classification system followed by classification symbols)
G09G5/10, G09G3/20, G09G5/00, H04N5/20

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-322047 A  (Pioneer Electronic Corp.), 24 November, 2000 (24.11.00), Par. Nos. [0003] to [0005]; Figs. 1, 2 & US 6661917 B1 | 1-5 |
| A | JP 2004-7301 A  (KDDI Media Will Corp.), 08 January, 2004 (08.01.04), Par. Nos. [0015] to [0021]; Figs. 1, 2, 7, 8 (Family: none) | 1-5 |
| A | WO 2005/107238 A1  (Mitsubishi Electric Corp.), 10 November, 2005 (10.11.05), Par. Nos. [0009] to [0033]; Figs. 1 to 8 & JP 2005-318198 A | 1-5 |

| ☒ | Further documents are listed in the continuation of Box C. | ☐ | See patent family annex. |
|---|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 29 June, 2007 (29.06.07) | 10 July, 2007 (10.07.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## INTERNATIONAL SEARCH REPORT

| | International application No. |
|---|---|
| | PCT/JP2007/061728 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-32551 A  (Seiko Epson Corp.),<br>29 January, 2004 (29.01.04),<br>Full text; all drawings<br>& US 2004/0032982 A1 | 1-5 |
| A | JP 2006-33230 A  (Sony Corp.),<br>02 February, 2006 (02.02.06),<br>Claim 3; Par. Nos. [0015] to [0023]; Figs. 1, 2<br>(Family: none) | 1-5 |
| A | JP 2006-93753 A  (Hitachi, Ltd.),<br>06 April, 2006 (06.04.06),<br>Full text; all drawings<br>& US 2006/0061842 A1    & GB 2429598 A<br>& CN 1753455 A | 1-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000322047 A